# EUROPEAN PATENT APPLICATION

(11) **EP 1 736 323 A1**
(43) Date of publication of application: **27.12.2006**
(21) Application number: 05013438.6
(22) Date of filing: 22.06.2005
(51) Int. Cl.: B42D 15/00, H01G 9/20

(54) **Security document comprising an electrical power supply means controlling a security means**

(71) Applicant: European Central Bank, 60311 Frankfurt am Main (DE)
(72) Inventor: Hinsch, Andreas, Dr., D-79254 Oberried (DE); Kern, Rainer, Dr., D-79111 Freiburg (DE); Georg, Andreas, Dr., D-79104 Freiburg (DE)
(74) Representative: Luderschmidt, Schüler & Partner

(57) **Abstract**

According to the present invention, a security document comprises an on-board electrical power supply means and a security means, wherein the on-board electrical power supply means is a dye-sensitized photovoltaic element (2) and the security means is an electrochromic element (3).

## Description

The present invention relates to a security document, particularly a banknote comprising an on-board electrical power supply means and a security means.

Although the invention refers to a security document, for example banknotes, passports, identify cards, checks, stocks, bonds etc., reference is made hereinafter to banknotes.

The identification and authentication of banknotes is a long-standing problem. In order to solve this goal, security means for banknotes have been developed and are being developed to allow users and/or machines to distinguish between genuine and forged banknotes and/or to discriminate among different values of banknotes.

Among the techniques adopted are the use of the special papers, special inks and patterns, the inclusion of watermarks and security threads as well. For example some of these techniques are disclosed in US-A-4 462 866, US-A-4 652 015, US-A-4 943 093 und US-A-5 161 829.

Although these traditional security means have been derived from sophisticated technological developments, it must be realised that they are becoming dated and more vulnerable to technological advances. Therefore, new security means have to be developed.

For example, EP-A-1 431 062 discloses a banknote comprising on-board electrical power supply means for driving a new class of electronic security means utilizing on-board power supply. The electronic security means are means comprising a microchip, electroluminescent materials, electro-active polymers/materials, light-emitting diodes and polymeric electronic displays.

A very similar approach is disclosed in WO 00/07151.

The security means as disclosed in EP-A-1 431 062 and WO 00/07151 have some very important disadvantages. First of all, it should be noted that the electrical power supply means and the microchips are widespread. Therefore, such elements are easily available. On the other hand, if very special chips are produced, these elements will cause enormous costs. Furthermore, the lifetime of the electric power supply means, the security means and the security document, especially the banknotes comprising these elements are limited, respectively.

It is an object of the present invention to provide a security document, particularly a banknote with a new class of electronic security means for allowing users and/or machines to distinguish between genuine and counterfeited banknotes solving the problems of the prior art.

This problem is solved with the features of claim 1. Preferred embodiments of the invention are subject matter of the independent claims.

According to the present invention, the security document, particularly the banknote, comprises a dye-sensitized photovoltaic element and an electrochromic element. The advantage of having a dye-sensitized photovoltaic element and an electrochromic element is that all means have a very high security. The high security is result from the fact that the dye-sensitized photovoltaic element and the electrochromic element can be produced in consideration of very specific requirements in a very cheap way. The very specific requirements need very special and sophisticated equipment.

The dye-sensitized photovoltaic element and the electrochromic element have a very high lifetime. Furthermore, these elements are very cheap. Therefore, the safety of the security document can be improved in a very astonishing manner.

According to the invention, the security document comprises an on-board electrical power supply means which is a dye-sensitized photovoltaic element.

The dye-sensitized photovoltaic element, also called as dye-solar cells, are known in the art. Usually, these solar cells comprises a semiconductor which is sensitized by a dye stuff in order to enhance the light absorption.

Preferably metal oxide semiconductors are used in dye-solar cells. Particularly suitable metal oxide semiconductors are oxides of the transition metals, and of elements of the third main group and of the fourth, fifth and sixth secondary groups (of the periodic System of elements) of titanium, zirconium, hafnium, strontium, zinc, indium, yttrium, lanthanum, vanadium, niobium, tantalum, chromium, molybdenum, tungsten, or alternatively oxides of zinc, iron, nickel or silver, perovskites such as SrTiO₃, CaTiO₃ or oxides of other metals of the second and third main groups or mixed oxides or oxide mixtures of these metals. Alternatively, any other conductive metals oxide with semiconductor properties and a large energy gap (band gap) between the valency band and the conductivity band can be used. Especially, TiO₂, ZnO and WO₃ can be used.

Useful dyes or sensitizers are known in the art. Examples of suitable chromophores, i.e. sensitizers, are complexes of transition metals of the type metal (L₃), (L₂) of ruthenium and osmium (e.g. ruthenium tris (2,2'bipyridyl-4,4'dicarboxylate), ruthenium is cis-diaqua pyridyl complexes, such as ruthenium cis diaqua bis (2,2'bipyridyl-4,4'dicarboxylate) and porphyrins (e.g. zinc tetra (4-carboxyphenyl) porphyrin) and cyanides (iron-hexacyanide complexes) and phthalocyanines.

The chromophores may be chemi-sorbed, adsorbed or otherwise be permanently added in the region of the surface of the metal oxide semiconductor. Favorable results are obtained, for example, with chromophores bonded to the surface of the metal oxide semiconductor by carboxylic acid ligands.

The semiconductor is usually in contact with an electrolyte, in order to achieve a dye-solar cell. Examples of an electrolyte for such photo-electrochemical cells comprise iodide, bromide, hydroquinone, or other redox systems as conducting ions. The electrolyte may contain a solvent, for example acrylonitrile. Furthermore, the electrolyte may contain gelating materials using molten salts, which are commonly used in battery technology.

The semiconductor and the electrolyte are usually contacted over a large surface area as known in the art.

Usually the dye-sensitized photovoltaic element comprises two electrode layers encapsulating the dye-sensitized photovoltaic element from the environment. At least one of the electrode layers has a light transmittance. The transparent electrodes are usually made of a chemically inert substance, such as glass or a polymer substrate. The electrode is usually coated with an transparent electrically conducting layer. Such layers are known in the art. These layers preferably comprise highly doped metal oxides, such as SnO₂:F, SnO₂:Sb, In₂O₃:Sn (ITO), Cd₂SnO₄, ZnO:Al and ZnO:In.

The dye-sensitized photovoltaic element is described in more detail in US 4,927, 721, US 6,369,934, US 4,190,950 and US 6,245,988.

Furthermore, the security document of the present invention comprises an electrochromic element. Electrochromic elements are known in the art. These elements usually comprise at least one electrochromic material. The electrochromic material changes its colour upon oxidation or reduction reversibly. Some classes of electrochromic materials comprise a pair of redox substances which form coloured, positively or negatively charged, chemically reactive free radicals after reduction or oxidation. The pair of redox substances preferably used is in each case a reducable and oxidizable substance. Both are preferably colourless or have only a slight colour. Under the action of an electric potential, one substance is reduced and the other is oxidized, at least one becoming coloured. For some classes of electrochromic materials in parallel to the electron injection and extraction, which causes the reversible colour change, an injection and extraction of positive ions, like protons or Li⁺ takes place. After switching off the potential, the two originally redox substances are reformed with their coloration or lightening of colour occurring.

Useful electrochromic substances are tungsten oxide, niobium oxide, titanium oxide, iridium oxide, nickel oxide, molybdenum oxide, antimon-tin oxide, prussian blue, polyaniline, polythiophene, viologene, polypyrrole, iodide or mixtures of two or more of these materials. Preferred polythiophene compounds are 3,4 polyethylene dioxythiophene (PEDOT) and poly(3,4-ethylenedioxythiophene-didodecycloxybenzene) (PEB).

Furthermore, as mentioned above, the electrochromic element may comprise a second redox couple, which can be considered as an ion-storage component or as an electrolyte as mentioned above. Useful components are iodide, bromide, or metal oxides as mentioned in US 6,175,441.

Usually, the electrochromic element comprises two electrode layers encapsulating the electrochromic element from the environment. At least one of the electrode layers has a light transmittance. The transparent electrodes are usually made of a chemically inert substance, such as glass or a polymer substrate. The electrode is usually coated with an transparent electrically conducting layer.

Preferred electrochromic elements are described in US 6,175,441 and US 6,369,934 in more detail.

The colour change of the electrochromic element is controlled by the dye-sensitized photovoltaic element.

According to a preferred embodiment of the present invention, the dye-sensitized photovoltaic element and the electrochromic element are flexible. Flexibility means that the photovoltaic element and the electrochromic element can be bend with a radius of curvature of 5 cm, more preferably 1 cm. The radius is measured according to the "simple support ends" method, top part of fig. 5, in "A mechanical assessment of flexible optoelectronic devices", Zhong Chen, Braina Cotterell, Wei Wang, Ewald Guenther, Soo-Jin Chua, Thin Solid Films vol. 394, pages 202_206 of the year 2001.

The flexibility of the photovoltaic element and the electrochromic element are usually limited by the thickness of the electrodes used to seal the elements from the environment. The electrodes are usually made of a transparent, chemically inert substance, such as glass or a polymer substrate. The electrode is usually coated with a transparent electrically conducting layer. Such layers are known in the art. These layers preferably comprise highly doped metal oxides, such as SnO₂:F, SnO₂:Sb, In₂O₃:Sn (ITO), Cd₂SnO₄, ZnO:Al and ZnO:In.

Preferably a glass substrate is used having a thickness not exceeding 50 µm, more preferably not exceeding 30 µm.

According to a further preferred embodiment of the present invention, the dye-sensitized photovoltaic element and the electrochromic element form one element. One element means that the electrochromic element and the dye-sensitized photovoltaic element use the same electrolyte component. That is, the electrochromic element and the photovoltaic element are sealed against the environment within one area.

Preferably, such combined element comprises at least three layers being encapsulated against the environmental influences. The first layer comprises the semiconductor being sensitised with a dye, the second layer is formed by the electrolyte and/or ion storage component as described above. The third layer comprises the electrochromic substance as described above. It should be noted that the electrochromic layer and the semiconductor layer have to be ionically and electronically connected in order to ensure an electron flow from the semiconductor layer to the electrochromic components.

Preferably the dye-sensitized photovoltaic element and the electrochromic element comprises a reflector layer. Preferably, between the semiconductor layer of the photovoltaic element and the electrochromic component of the electrochromic element, a reflector layer is provided. Useful reflector layers have a white colour and do essentially not attack the organic substances contacting the reflector layer. Preferably, the reflector layer has preferably an electron conducting ability. Furthermore, the reflector layer is a porous substance and the pores are filled with the electrolyte in order to achieve an ionic conductivity between the semiconductor layer of the photovoltaic element and the electrochromic element. Useful materials are ZnO and TiO₂. Surprisingly, by using a reflector layer the visibility of the colour change of the electrochromic element can be improved.

Preferably, the electrochromic element is nearby a colour reference to ease the visibility of a correct colour change of the electrochromic element. Such colour reference may comprise different tints which the electrochromic element passes through by illumination the dye-sensitized photovoltaic element.

The dye-sensitized photovoltaic element and the electrochromic element can be arranged on different sides of the security document or on the same side of the security document. Preferably, the photovoltaic element and the electrochromic element are arranged on different sides of the security document. Such arrangement can be achieved by combining the photovoltaic element and the electrochromic element as mentioned above.

According to a further preferred embodiment, the active area of the dye-sensitized photovoltaic element is larger than the area of the electrochromic element. Surprisingly, using such approach, the switching type of the electrochromic element can be reduced. Preferably the ratio of the active area of the dye-sensitized photovoltaic element to the area of the electrochromic element is in the range of 10:1 to 2:1, more preferably 5:1 to 3:1.

According to a preferred embodiment of the present invention the security element comprises at least two dye-sensitized photovoltaic elements and at least two electrochromic elements. More preferably, the security elements comprises at least four electrochromic elements and most preferably at least ten electrochromic elements. These elements can form a pixel configuration. A pixel configuration is a configuration in which the different elements are arranged nearby. As mentioned above it is possible that the photovoltaic element and the electrochromic element form one element by combining a dye-sensitized semiconductor layer and an electrochromic layer by an electrolyte having oxidation reduction properties. The pixel configuration can be easily prepared by dividing different parts of these layers by using a sealing. Therefore, the pixel configuration can be prepared by using two electrode sheets being separated by a web of sealing material. Preferably, the area within one gap can be used to prepare the combined dye-sensitized photovoltaic and the electrochromic element.

Such configuration has the surprising effect that the lifetime of the security element is improved. Furthermore, if some of the electrochromic elements are destroyed, the banknote can be replaced while a part of the security elements still work.

The switching time is the time needed to switch the electrochromic element from the bleached state to the coloured state. The switching time of the electrochromic element is defined preferably below ten minutes, more preferably before 5 minutes and most preferably 1 minute. The switching time is defined as follows: For the colouring process, the device is kept in dark until it reaches an equilibrium. Then the illumination with a solar simulator lamp with a light intensity corresponding to 10% of the intensity of the sun (AM1.5) is switched on and the change in the visual reflectance is measured. The "switching time" is defined here to be the time, in which 63% of the total change of the visual reflectance is reached.

The switching time can be adjusted by the ratio of the area of the photovoltaic element to the area of the electrochromic element. Furthermore, as mentioned above, the switching time depends on the electrochromic component used to prepare the electrochromic element.

According to a further embodiment of the present invention, the security document comprises at least two electrochromic elements having different switching times. According to that embodiment, there are at least two colour changes occurring at different times. Such behaviour cannot be imitated in an easy way.

Preferably, the security document comprises at least two dye-sensitized photovoltaic elements being serially connected. Such approach may be used in order to prepare a security element which shows a colour change at low ambient light intensities.

The bleaching time is the time needed to switch the electrochromic element from the coloured state to the bleached state. The bleaching time of the electrochromic element is preferably below ten minutes, more preferably before 5 minutes and most preferably 1 minute. Accordingly, the switching time for the bleaching process is defined as the time, in which 63% of the total change of the visual reflectance is reached after switching of the illimination.

The bleaching time can be adjusted by the use of catalysts converting the coloured state of the electrochromic substance to the bleached state. Useful catalysts are Pt, Pd, Ni, Au, Os, Re, Ir, Ru, and Rh. The catalyst can be arranged as a separate layer, for example onto or below a layer, which comprises a semiconductor being sensitised with a dye, or onto or below a layer, which comprises an electrochromic material, or onto or below a transparent electronically conducting layer. Furthermore, it can be arranged as an additive in the electrolyte and/or in a layer which comprises a semiconductor being sensitised with a dye, or in a layer, which comprises an electrochromic material, especially, if these layers are made in such way, that they are porous.

According to a preferred embodiment of the present invention the electrochromic element or the dye-sensitized photovoltaic element comprises a bend protection. Bend protection means that the security document, especially a banknote can be bended without destroying the electrochromic element and/or the dye-sensitized photovoltaic element. A bend protection can be achieved by a stable metal frame surrounding the electrochromic element and/or the dye-sensitized photovoltaic element. Furthermore, the bend protection may be achieved by producing a electrochromic element and/or a dye-sensitized photovoltaic element having a small dimension. Preferably, the maximum dimension of the electrochromic element and/or the dye-solar cell does not exceed 1 cm, more preferably 5 mm.

The thickness of the electrochromic element and/or the dye-solar cell does preferably not exceed 200µm more preferably the thickness does not exceed 100 µm.

According to a preferred embodiment of the present invention the photovoltaic element and the electrochromic element are applied by printing technology (e. g. ink jet, off-set, screen etc.) onto the banknote-surface.

Flexible glass foils can be used in order to produce the electrochromic element and/or the dye-sensitized photovoltaic element of the present invention. Thin glass foils would be most suitable for an absolutely airtight encapsulation of the security feature in combination with a glass thread sealing. Furthermore, all state of the art construction steps of the dye-solar cell technology like sintering of the internal crystal layers can be applied. The thin glass foils have to be covered with an usual thin transparent conducting oxide layer (TCO layer) like SnO₂:F or ITO as mentioned above.

Before printing the different nanocrystalline layers of the system the TCO layer can optionally be structured by laser techniques, for example, in order to produce a pixel configuration as mentioned above.

The nanocrystalline layer of the dye solar cell and the electrochromic system will be printed on the substrate. Such techniques are known in the art. For example the different nanocrystalline particles can be incorporated by screen-printing pastes. After drying, the layers can be sintered at 450°C. The glass frit paste, used for the encapsulation of the system will be also screen-printed. Furthermore, it is possible to reduce the sintering temperature according to document US 2003/0189402 by using special polymer materials in order to interconnect the nanoparticle material usually used to prepare the semiconductor layer.

The dye for the dye-sensitized photovoltaic element and the electrolyte for the dye-sensitized photovoltaic element/electrochromic element can be incorporated into the system with automatic nanoliter-dispenser techniques, like inkjet. Preferably, a quasi-solid electrolyte system gelating materials using molten salts, which are commonly used in the battery technology can be used.

Usually, the photoelectrochromic security system has to be sealed. In order to obtain an air tight sealing the glass frit will be locally melted by laser techniques. Preferably, ultrathin glass foils having a low thermal expansion coefficient are used. If these glass foils are used, the thermal sealing can only be applied locally.

Furthermore, also a polymer sealing may be applied. Using a polymer sealing, the sealing temperature can be much lower.

The thin glass foils can be laminated on a supporting polymeric substrate. This substrate may be part of the banknotes as mentioned above.

Furthermore, it is possible to use flexible conducting polymeric foils. Preferably these polymeric substrates are ultra high barrier films in order to achieve a good encapsulation of the material. Such foils are commercially available.

The banknote is usually produced by printing a banknote substrate. The banknote substrate can be produced of a paper, plastic or polymer, elemental metallic alloy foils or a mix composite of two or more of the mentioned substrate type materials. The banknote substrate may comprise a flexible conductible thin glass foil substrate and at least one of the other substrate type materials mentioned above. Preferably, a banknote according to the present invention comprises a flexible conducting thin glass foil substrate and a polymer substrate, paper substrate, plastic/polymer substrate. Banknotes based on polymer substrates, for example biaxially oriented polypropylene, are currently in circulation in dozen countries.

Preferably, the photovoltaic cell and/or the electrochromic element is integrated into graphical design printing on the substrate means of the banknote so that the cell does not become apparent at once.

Security threads and holograms are widely used for authentication. The photovoltaic cell can be part of or integrated into the security thread or the hologram of the banknote.

For the purpose of illustrating the present invention, there are shown in the accompanying drawings embodiments which are presently preferred; it being understood that the invention is not limited to the precise arrangement and instrumentalities shown.
Fig. 1 is a schematic cross sectional view of a first embodiment of the security document, according to the present invention.
Fig. 2 is a schematic cross sectional view of a second embodiment of the security document, according to the present invention.
FIG. 3 is a schematic cross sectional view of a pixel configuration of preferred combined dye-sensitized photovoltaic/ electrochromic elements.
FIG. 4 is a schematic plan view of a pixel configuration of Fig. 3.

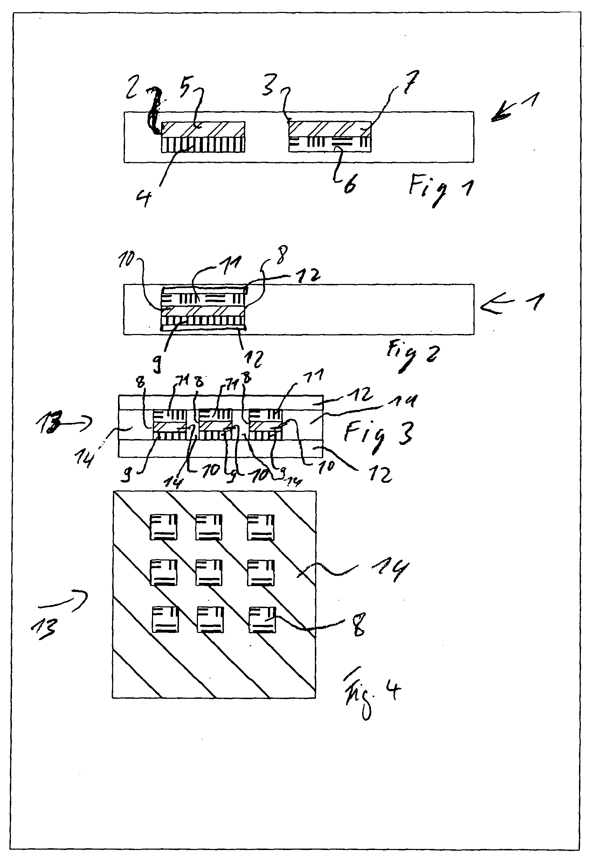

Fig. 1 shows a cross sectional view of a security document, for example a banknote according to the present invention. The security document 1 comprises a dye-sensitized photovoltaic element 2 and a electrochromic element 3 being electrically connected. The dye-sensitized photovoltaic 2 element comprises a dye-sensitized semiconductor layer 4 being in contact with an electrolyte layer 5. The electrode layers are formed within the substrate of the security document by depositing a layer of an conducting transparent metal oxide. The electrochromic element 3 comprises a layer of an electrochromic compound 6 being in contact with a layer of an ion storage compound 7 (electrolyte layer). The electrode layers of the electrochromic compound are formed within the substrate of the security document by depositing a layer of an conducting transparent metal oxide.
Fig. 2 shows a cross sectional view of second embodiment of the security document according to the present invention. The security document 1 comprises a combined dye-sensitized photovoltaic/ electrochromic element 8. The combined element 8 comprises a dye-sensitized semiconductor layer 9 being in contact with a reflector layer 10 containing an electrolyte. The reflector layer is in contact with a layer a layer of an electrochromic compound 11. The sealing layers 12 seal the combined element from the environment. The sealing layers are made separately of a thin glass substrate. The combined element is protected by a polymer substrate of the security document.
Fig. 3 shows a cross sectional view of a pixel configuration 13 of preferred combined dye-sensitized photovoltaic/ electrochromic elements 8. The combined element 10 comprises a dye-sensitized semiconductor layer 9 being in contact with a reflector layer 10 containing an electrolyte. The reflector layer 10 is in contact with a layer of an electrochromic compound 11. The sealing layers 12 seal the combined elements with regard to the top and the bottom. The different combined elements are separated by seals 14 being applied edgewise. The seals 14 separating the different combined elements 8 can be made of the same or different materials as the sealing layers 12.
Fig. 4 shows a plan view of a pixel configuration 13 as described with regard to Fig. 3. The seal 14 form a web separating the different combined dye-sensitized photovoltaic/ electrochromic elements 8.

## Claims

1. Security document comprising an on-board electrical power supply means and a security means, **characterized in that** the on-board electrical power supply means is a dye-sensitized photovoltaic element and the security means is an electrochromic element.

2. Security document according to claim 1, wherein the security document is a banknote.

3. Security document according to claim 1 or 2, wherein the dye-sensitized photovoltaic element and the electrochromic element are flexible.

4. Security document according to one of the claims 1 to 3, wherein the dye-sensitized photovoltaic element and the electrochromic element form one element.

5. Security document according to claim 4, wherein the dye-sensitized photovoltaic element and the electrochromic element comprises a reflector layer.

6. Security document according to one of the claims 1 to 5, wherein the dye-sensitized photovoltaic element and the electrochromic element are arranged on different sides of the security document.

7. Security document according to one of the claims 1 to 3, wherein the dye-sensitized photovoltaic element and the electrochromic element are arranged on the same side of the security document.

8. Security document according to one of the claims 1 to 7, wherein the active area of the dye-sensitized photovoltaic element is larger than the area of the electrochromic element.

9. Security document according to one of the claims 1 to 8, wherein the security document comprises at least two dye-sensitized photovoltaic elements and at least two electrochromic elements.

10. Security document according to claim 9, wherein the dye-sensitized photovoltaic elements and the electrochromic elements form a pixel configuration.

11. Security document according to claim 9 or 10, wherein the electrochromic elements have different switching times.

12. Security document according to one of the claims 1 to 11, wherein the electrochromic elements are near by a colour reference.

13. Security document according to one of the claims 1 to 12, wherein the security document comprises at least two dye-sensitized photovoltaic elements being serially connected.

14. Security document according to one of the claims 1 to 13, wherein the switching time of the electrochromic element is below 10 minutes.

15. Security document according to one of the claims 1 to 14, wherein the electrochromic element and/or the dye-sensitized photovoltaic element comprises a bend protection.

16. Security document according to one of the claims 1 to 15, wherein the maximum length of the electrochromic element and/or the dye-sensitized photovoltaic element does not exceed 1 cm.

17. Security document according to claim 16, wherein the maximum dimension of the electrochromic element and/or the dye-sensitized photovoltaic element does not exceed 5 mm.

18. Security document according to one of the claims 1 to 17, wherein the thickness of the electrochromic element and/or the dye-sensitized photovoltaic element does not exceed 200 µm.
